(19)

Europäisches
Patentamt
European
Patent Office
Office européen
des brevets

(11) **EP 3 276 962 A1**

(12) **EUROPEAN PATENT APPLICATION**

(43) Date of publication:
**31.01.2018 Bulletin 2018/05**

(21) Application number: **16305956.1**

(22) Date of filing: **25.07.2016**

(51) Int Cl.:
**H04N 19/33** (2014.01)   **H04N 19/37** (2014.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **ALCATEL LUCENT
92100 Boulogne-Billancourt (FR)**

(72) Inventors:
• **AERTS, Maarten
2018 Antwerpen (BE)**

• **MACQ, Jean-François
2018 Antwerpen (BE)**

(74) Representative: **ALU Antw Patent Attorneys
Intellectual Property and Standards
Copernicuslaan 50
2018 Antwerp (BE)**

Remarks:
Amended claims in accordance with Rule 137(2)
EPC.

(54) **METHOD AND DEVICE FOR TRANSMISSION OF A VIDEO**

(57)   Embodiments relate to a method for transmission of a video, executed by a decoder device (11, 21, 31), comprising:
- receiving, from an encoder device (10, 20, 30), successive base layers through a first transmission channel (15, 25, 35) and successive enhancement layers through a second transmission channel (16, 26, 36), wherein the second transmission channel has a higher latency than the first transmission channel, wherein a base layer, respectively an enhancement layer, specifies a partial tree of nodes (2, 3, 4) specifying geometry data, a base layer including a root node and an enhancement layer not including a root node, the geometry data of a node specifying a contour (5) or a texture,
- determining a combined tree by combining:
- a received enhancement layer with an adapted base layer which has been determined in function of a plurality of successive corresponding base layers, or
- a received base layer with an adapted enhancement layer which has been determined in function of a corresponding enhancement layer and a plurality of successive corresponding base layers,
- determining a modified tree (Tree'(t)) in function of said combined tree, by recursively modifying the geometry data of nodes of the combined tree in function of the geometry data of their respective parent nodes.

FIG. 2

EP 3 276 962 A1

## Description

FIELD OF THE INVENTION

The present invention relates to the field of telecommunications. In particular, the present invention relates to a method and a device for transmission of a video.

BACKGROUND

In some applications, latency in video transmission is not an important issue. But there are applications where it does matter a lot. A first example of latency-crucial applications are video chats, video conferencing, etc. A user may have the impression that the remote person they're chatting with seems to need three seconds to think about what has just been said before replying. This is of course not because the conversation partner is slow, but because the network is. Latency becomes even more crucial in a second type of use cases, where a device is operated remotely. Examples are: remotely flying a drone or remotely operating robotic machinery (for instance medical) from a camera feed. It is crucial that the user sees exactly what happens at that time, so they can quickly respond. If there is latency, the user has to compensate for that and this often leads to overcompensation. Basically, putting it in system theory terms, the action-reaction loop has a delay in it and can thus be unstable.

The problem really is that video data is too bulky to be sent without latency. It gets spread over packets and they need to be assembled first before the receiver can build a new frame. This involves putting a buffer at the receiver, but buffers introduce latency, typically up to seconds. One could require the packets all to have high priority and get special treatment by the network, but that is not a scalable solution if everyone wants the highest priority.

Representation formats that split content into quality layers exist. SVC and SHVC are examples of such codecs. They allow for a light-weight base layer, containing the essence of the video, and a bulky enhancement layer, containing more details. This is used to transparently jump from high quality to lower quality when bandwidth is limited and back when bandwidth comes up again. Although the base layer may be sent in a transmission channel with higher priority than the enhancement layer, these representation formats do not offer a solution to the latency problem.

SUMMARY

It is thus an object of embodiments of the present invention to propose methods and devices for transmission of a video, which do not show the inherent shortcomings of the prior art.

Accordingly, embodiments relate to a method for transmission of a video, executed by a decoder device, comprising:

- receiving, from an encoder device, successive base layers through a first transmission channel and successive enhancement layers through a second transmission channel, wherein the second transmission channel has a higher latency than the first transmission channel, wherein a base layer, respectively an enhancement layer, specifies a partial tree of nodes specifying geometry data, a base layer including a root node and an enhancement layer not including a root node, the geometry data of a node specifying a contour or a texture,
- determining a combined tree by combining:

  - a received enhancement layer with an adapted base layer which has been determined in function of a plurality of successive corresponding base layers, or
  - a received base layer with an adapted enhancement layer which has been determined in function of a corresponding enhancement layer and a plurality of successive corresponding base layers,

- determining a modified tree in function of said combined tree, by recursively modifying the geometry data of nodes of the combined tree in function of the geometry data of their respective parent nodes.

Correspondingly, embodiments relate to a decoder device for transmission of a video, comprising means configured for performing the above method.

In some embodiments, said combined tree is determined by combining a received enhancement layer with an adapted base layer, wherein said adapted base layer is a received base layer which has been determined, by the encoder device, in function of a plurality of successive corresponding base layers.

In some embodiments, said combined tree is determined by combining a received enhancement layer with an adapted base layer, the method comprising determining said adapted base layer in function of a plurality of successive received base layers.

For example, determining said adapted base layer in function of a plurality of successive received base layers may comprise iteratively determining an updated base layer by changing the geometry data of a first base layer in function of the geometry data of a second base layer, without changing the structure of the first base layer.

In some embodiments, said combined tree is determined in function of a received base layer and an adapted enhancement layer, the method comprising determining said adapted enhancement layer by iteratively determining a restructured enhancement layer in function of the geometry data of a received enhancement layer and of respective differences between the structure of two successive base layers.

The method may comprise determining an output frame by rasterizing and/or rendering said modified tree.

The method may comprise determining a frame offset between said first transmission channel and said second transmission channel.

Other embodiments relates to a method for transmission of a video, executed by an encoder device, comprising:

- determining a tree of nodes in function of a frame, wherein said nodes specifies geometry data defining contours and textures, wherein said contours segment said frame in a plurality of regions,
- determining a base layer and an enhancement layer in function of said tree, wherein a base layer, respectively an enhancement layer, specifies a partial tree of nodes, a base layer including a root node and an enhancement layer not including a root node,
- sending said base layer to a decoder device through a first transmission channel and sending said enhancement layer to the decoder device through a second transmission channel, wherein the second transmission channel has a higher latency than the first transmission channel.

Correspondingly, embodiments relates to an encoder device for transmission of a video, comprising means configured for performing the above method.

In some embodiments, the method comprises:

- determining successive base layers in function of successive frames,
- determining differences between the structure of two successive base layers, and
- sending said differences to the decoder device through said first transmission channel.

Embodiments also relates to a system comprising at least one encoder device and at least one decoder device.

Embodiments also relate to a computer program comprising instructions for performing the method mentioned before when said instructions are executed by a computer.

BRIEF DESCRIPTION OF THE DRAWINGS

The above and other objects and features of the invention will become more apparent and the invention itself will be best understood by referring to the following description of embodiments taken in conjunction with the accompanying drawings wherein:

Figure 1 is a graph illustrating the determination of a vectorized representation of a video frame,
Figures 2 to 5 are block diagrams of encoder devices and decoder devices, according to respective embodiments,
Figure 6 is a graph illustrating the functioning of a prediction module in an embodiment, and
Figure 7 is a block diagram of the structure of an encoder device or decoder device.

DESCRIPTION OF EMBODIMENTS

A video comprising successive frames is transmitted from an encoder device to a decoder device, through a network. The embodiments described hereafter rely on a vectorized representation of a frame, with a tree-structured hierarchy of contours or regions. In the embodiments described hereafter, the encoder device comprises a vectorization module which determines a vectorized representation of an input frame.

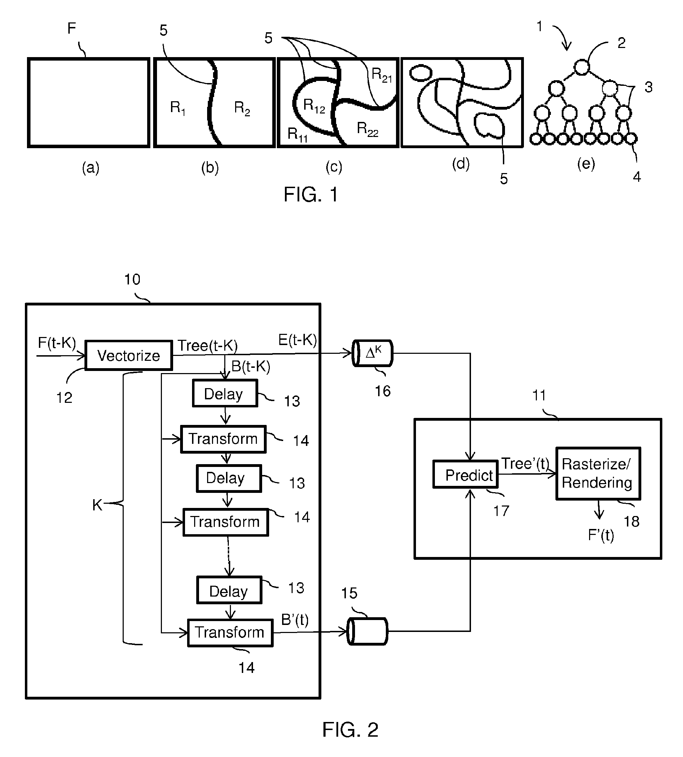

**Figure 1** is a graph representing the determination of the vectorized representation. As illustrated in parts (a) to (d), a frame F is recursively segmented in regions. The frame F is coarsely segmented in two or more child-regions, labeled $R_1$ and $R_2$ in the illustrated example. Each of these subregions is further split into grand-child regions, labeled $R_{11}$, $R_{12}$, $R_{21}$ and $R_{22}$ in the illustrated example, and so on till the segmentation yields sufficient quality renderings.

Regions may be represented by assigning labels to each pixel. Also, each split may be represented by one or more curves, i.e. the boundary between the child-regions. So dually, a tree of subregions can also be represented by a tree of contours 5. A child-contour may be closed or may start at a contour 5 higher up the hierarchy and end at another (or the same) contour 5. The root-contour will be the frame rectangle. These contours 5 allow for a vectorized representation, which is more concise (especially at the root) than a rasterized pixel labeling.

Accordingly, the encoder device determines a tree 1 specifying the parent-child relationships between the contours 5 and their geometry. The tree 1 comprises a root node 2 and successive generations of child nodes, including intermediate nodes 3 and leaf nodes 4. Each node specifies geometry data. More specifically, the root node 2 corresponds to the frame rectangle. An intermediate node 3 specifies the geometry of a contour 5, for example using known vector representation techniques such as Bezier, spline... A leaf node 4 specifies texture data associated with one of the regions defined by its parent nodes. A texture may be for example a color, a wavelet, or even a block-based FFT, like in MPEG.

In an example, the encoder device first determines the regions by assigning labels to the pixels of the frame. This may comprise for example using known edge detection techniques for identifying outlines of objects in the frame. Then, the encoder device determines the tree 1 by converting the labeled frame to a vectorized representation of the limits between regions and textures.

The encoder device separates the tree 1 into a base layer and an enhancement layer. The base layer comprises a partial tree including the root node 2 of the tree 1 and some intermediate nodes 3. The number of generations needs not be fixed, nor constant over the whole tree. The only requirement is that if a node is in the base layer, its parent is too. The base layer specifies the most significant outlines of objects in the frame. The enhancement layer comprises a partial tree including the remaining intermediate nodes 3 and leaf nodes 4. In some cases, the enhancement layer may comprise only leaf nodes 4.

In the various embodiments described hereafter, the base layer is sent from the encoder device to the decoder device through a first transmission channel, and the enhancement layer is sent from the encoder device to the decoder device through a second transmission channel having a higher latency than the first transmission channel. For example, sending in the first transmission channel comprises marking packets with a higher priority than in the second transmission channel.

The decoder device receives successive base layers and enhancement layers. Given the difference in latency, the decoder device cannot simply combine partial trees from the base and enhancement layers. Some processing should be done at the encoder device and/or at the decoder device so that a received base layer and a received enhancement layer can be combined into a tree and rendered. Various examples are given in the embodiments described hereafter.

Before describing the embodiments, some definitions are given. As said, the encoder device builds a vectorized representation of the scene, which has the structure of a tree. In this context:

- "Structure" refers to the parent-child relations between regions, or equivalently contours.
- "Geometry" refers to the actual spatial locations of handles of the vectorized curves in this representation.
- "Restructuring" is changing the structure of a partial tree to make it compatible with another one, not touching the geometry.
- "Updating" is changing the geometry of a tree to make it comply with recent observations, not touching the structure.
- "Predicting" is changing the geometry of a child branch to the geometry of a parent branch.

**Figure 2** is a block diagram of a system for transmission of a video according to a first embodiment, comprising an encoder device 10 and a decoder device 11.

The encoder device 10 and the decoder device 11 are connected by a first transmission channel 15 and a second transmission channel 16. The second transmission channel 16 has higher latency than the first transmission channel 15. This results in a frame offset K. We assume that the encoder device 10 can probe the frame offset K (latency). It need not be constant, but the encoder device 10 can retrieve it somehow.

The encoder device 10 comprises a vectorizing module 12, a plurality of delay modules 13 and a plurality of transform modules 14.

At time t-K, the vectorizing module 12 determines a tree Tree(t-K) in function of a frame F(t-K), and separates Tree(t-K) between enhancement layer E(t-K) and base layer B(t-K). The encoder device 10 sends the enhancement layer E(t-K) in the second transmission channel 16.

Between time t-K+1 and time t, while the vectorizing module 12 determines successive base layers B(t-K+i) in function of corresponding frames F(t-K+i), for i=1 to K, the encoder device 10 keeps the structure of the base layer B(t-K), but updates its geometry in function of the successive base layers B(t-K+i). The plurality of delay modules 13 and transform modules 14 determines updated base layers B'(t-K+i) in function of the structure of B(t-K) and the geometry of B(t-K+i).

Note that a transform module 14 may have as input two partial trees A and B, both having distinct geometry and structure. Imposing the structure of A on the geometry of B can be seen as either restructuring B->B' with A as side info or updating A->A' with B as side info. Either way, A'=B', these two operations are equivalent. This operation can be performed according to various possibilities. For example, in an edge-based approach, the edges of the base layer B(t-1) will be matched to those of base layer B(t). The structure of B(t) will be different, but the transform module 14 only updates the geometry of an edge in B(t-1) to its corresponding edge in B(t). Note that edges may be matched partially as well, not necessarily as a whole. Some will find no matches, some edges will be double matched, but so be it. The structure needs to be kept, so that's the overhead cost of doing that. Edges with no match will have trivial geometry reducing them to a point, or an edge near another existing edge. Double matched edges will coexist on top of each other. Note that this suboptimal situation only lasts K frames at most (so there is no continued drift). In another region-base approach, a transform module 14 takes the structure from B(t-1), including whatever metric and its parameters that were used to make the splits and apply them to the new image at time t. For instance if there existed an edge between a dark and a light region at t-1, that edge is aligned to create the best similar dark-light split in the image at time t. One very known technique for tracking regions/contours over successive frames is called Mean Shift, just to give an example. Similar comments about regions that disappear or get merged creating overhead apply here as well.

Accordingly, at time t, the updated base layer B'(t) has the structure of B(t-K) and specifies a geometry updated in function of B(t). The encoder device 10 sends the updated base layer B'(t) to the decoder device 11 through the first transmission channel 15.

If the latency offset K is variable, a good implementation would dynamically add or remove delay modules 13 and transform modules 14 to the base layer pipeline to counterbalance the delay in the second transmission channel 16. Note that in software, this is merely setting an iteration count. You don't really have to allocate more or less resources.

The decoder device 11 comprises a prediction module 17 and a rasterizing/rendering module 18.

At time t, the decoder device 11 receives the updated base layer B'(t) and the enhancement layer E(t-K). They have compatible structures because, as explained before, B'(t) has the same structure as B(t-K). Moreover, B'(t) reflects the geometry of B(t), thus the content of the frame F(t). In other words, the main outlines of frame F(t) are received by the decoder at time t, with minimal latency (here, it should be noted that we measure time t in terms of successive frames, not taking into account the latency of the first transmission channel 15).

The decoder device 11 determines a combined tree by combining E(t-K) and B'(t). This is possible because they have compatible structure. The decoder device 11 simply puts the branches of E(t-K) under the corresponding parent nodes of B'(t).

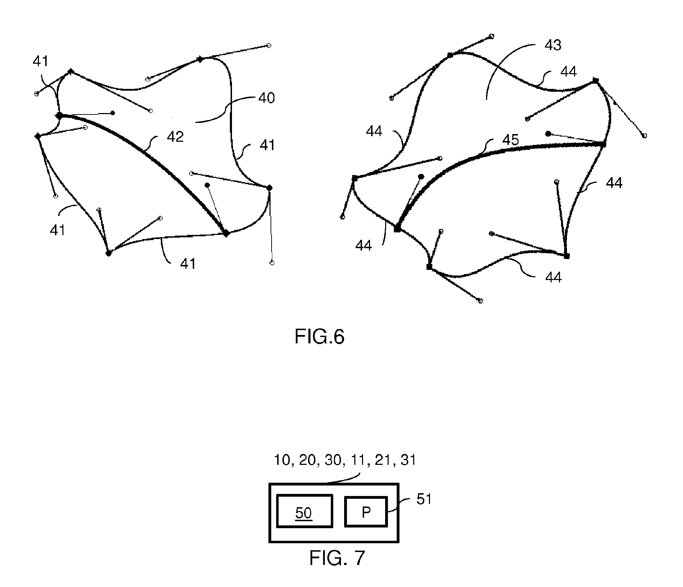

Then, the prediction module 17 determines a modified tree Tree'(t), by modifying the geometry of E(t-K) to comply with the geometry of B'(t). More specifically, the prediction module 17 recursively modifies the geometry of a child node to comply with the geometry of its patent node. An example will be described with reference to Figure 6.

Finally, the rasterizing and rendering module 18 converts the modified tree Tree'(t) to the pixel domain for display of an output frame F'(t). Since the frame F'(t) is based on the geometry of the base layer B(t) of the input frame F(t), this can be regarded as a transmission with minimal latency (in other words, only the latency of the first transmission channel, which may be a high priority channel).

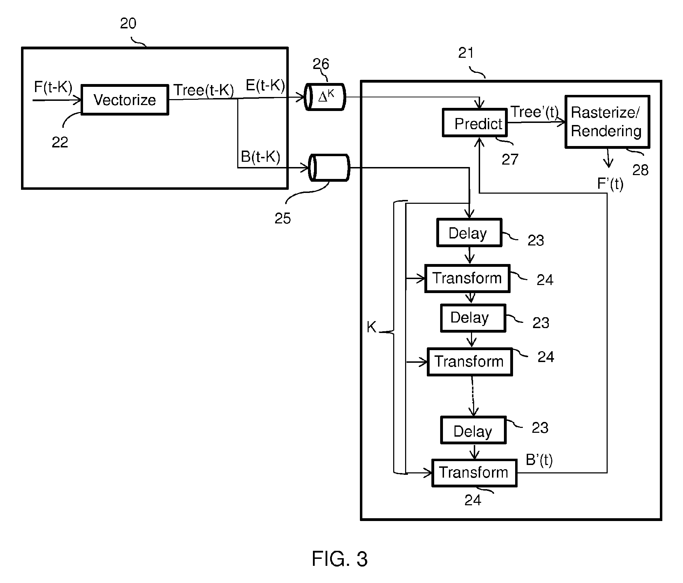

**Figure 3** is a block diagram of a system for transmission of a video according to a second embodiment, comprising an encoder device 20 and a decoder device 21. The encoder device 20 and the decoder device 21 are connected by a first transmission channel 25 and a second transmission channel 26. The encoder device 20 comprises a vectorizing module 22. The decoder device 21 comprises a plurality of delay modules 23, a plurality of transform modules 24, a prediction module 27 and a rasterizing/rendering module 28.

The functioning of this second embodiment is similar to the first embodiment, except that the line of delay modules 23 and transform modules 24 for determining the updated base layer B'(t) is located at decoder side. More details are apparent from the comparison of Figures 2 and 3 and will not be described further.

In the second embodiment, multiple decoder devices 21 with different delays (frame offset K) can receive the same encoded video stream. Also, it might be easier for the receiver to probe the latency on the channel than for the sender. However, every decoder now needs to do more computations.

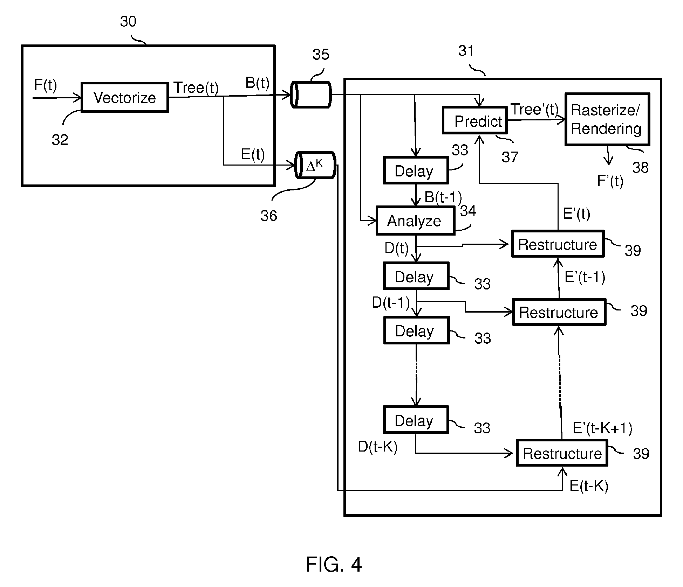

**Figure 4** is a block diagram of a system for transmission of a video according to a third embodiment, comprising an encoder device 30 and a decoder device 31, connected by a first transmission channel 35 and a second transmission channel 36. The second transmission channel 36 has higher latency than the first transmission channel 35. This results in a frame offset K.

The encoder device 30 comprises a vectorizing module 32. At time t, the vectorizing module 32 determines a tree Tree(t) in function of a frame F(t), and separates Tree(t) between enhancement layer E(t) and base layer B(t). The encoder device 30 sends the base layer B(t) in the first transmission channel 35 and the enhancement layer E(t) in the second transmission channel 36.

The decoder device 31 comprises a plurality of delay modules 33, a analyze module 34, a plurality of restructure module 39, a prediction module 37 and a rasterizing/rendering module 38.

Due to the frame offset K, the decoder device 31 receives, at time t, the base layer B(t) and the enhancement layer E(t-K). They cannot be combined into a tree because they do not have compatible structure. Accordingly, the decoder device 31 restructures the received enhancement layers in function of the changes in structure of the successive base layers.

More specifically, the analyze module 34 determines the differences D(t) between the structure of B(t) and B(t-1). The differences D(t) to D(t-K) are stored. A restructured enhancement layer E'(t-K) is determined by changing the structure of E(t-K) in function of the differences D(t-K). This is iterated so as to determine a restructured enhancement layer E'(t), which has the geometry of E(t-K) but a structure which reflects the successive change in the structure of base layers B(t-K) to B(t). This is illustrated by the line of delay modules 33 and restructure modules 39.

The analyze module 34 and the restructure modules 39 may be implemented according to various possibilities. Tree graphs have a sort of 'balance' metric, meaning they are well-balanced if none of its branching creates siblings that are unproportionally distributed. For instance, at the root you will seldom see a leaf branch next to a branch containing the rest of the tree. For images this is reflected as making the first splits about distinguished edges and further refining towards the details. Never start with a detail. Now, what was a detail at time t1 may become an important object at time t2, e.g. an object approaching from the background to the foreground, or an object turning, making a new side appear. If we would keep the structure of t1, that tree would be heavily out-of-balance at t2. In graph theory there exist operations on trees to make them more balanced, basically by detaching a branch at a heavy side and add them to an otherwise light branch. In the present context, in an example, the analyze module 34 and the restructure modules 39 perform the inverse operation. Indeed, the vectorization module will probably produce two balanced trees at time t and t+1, but analyze module 34 and the restructure modules 39 need to trace back how the structure of B(t) can be reverted to the structure of B(t-1) by reversing the balancing operations that were performed implicitly by the vectorization module (they are not done explicitly as balancing operations, so we cannot query them from the vectorization module). For instance, B(t-1) exist of a vertical split between left region 1 and right region 2. Furthermore, region 2 is split horizontally in a top region 2a and a bottom region 2b. Suppose, at time t, region 2a becomes more prominent and the vectorization module decides to first split the top-right corner as 2' from the remainder as 1'. And then split 1' into a left part 1 a' and right part 1 b'.

```
1 | 2a            |  2'
  |------   =>    |---------
  |  2b       1a' | 1b'
  B(t-1)          B(t)
```

It is clear that leaf 2b was detached from 2 at time t-1 and placed under 1' at time t. Now the underlying branches of those regions, which are defined in the enhancement layer, need to be restructured to conform the new base layer structure. The matching of B(t-1) to B(t) is simlar as described above for the transform module 14. It can be done edge- or region based. Same caution when regions dissappear or merge.

The decoder device 31 determines a combined tree by combining E'(t) and B(t). This is possible because they have compatible structure. Then, the prediction module 37 determines a modified tree Tree'(t), by modifying the geometry of E'(t) to comply with the geometry of B(t). More specifically, the prediction module 37 recursively modifies the geometry of a child node to comply with the geometry of its patent node. An example will be described with reference to Figure 6.

Finally, the rasterizing and rendering module 38 converts the modified tree Tree'(t) to the pixel domain for display of an output frame F'(t). Since the frame F'(t) is based on the structure and geometry of the base layer B(t) of the input frame F(t), this can be regarded as a transmission with minimal latency (in other words, only the latency of the first transmission channel, which may be a high priority channel).

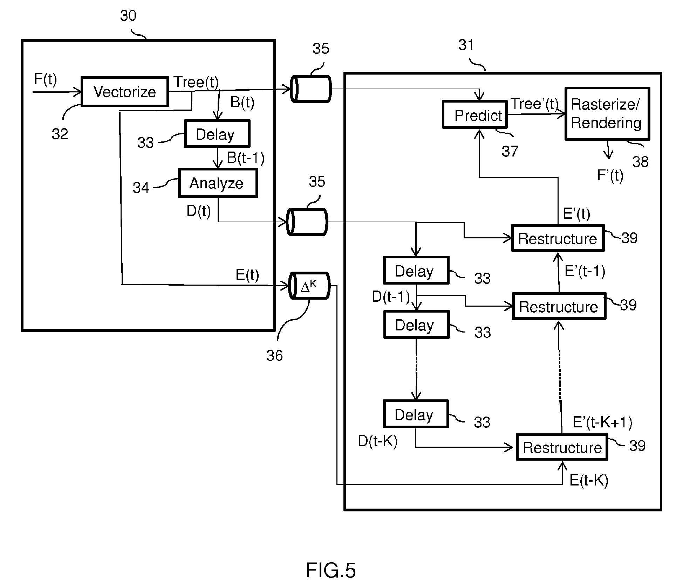

**Figure 5** is a block diagram of a system for transmission of a video according to a fourth embodiment. The fourth embodiment may be regarded as a variation of the third embodiment of Figure 4, with the difference that the analyze module 34 and corresponding delay module are located at the encoder device 30. The differences D(t) are transmitted in the first transmission channel 35. The functioning is similar and will not be described in details.

In this embodiment, some processing is shifted to the decoder device 30, thus processing at the decoder device 31 is simplified.

**Figure 6** is a graph illustrating the functioning of the prediction module 17, 27 or 37. As described before, the input of the prediction module is a tree determined by combining a received enhancement layer with an adapted base layer, or a received base layer with an adapted enhancement layer. In both case, a contour in the enhancement layer splits a parent region in two child regions. The geometry of the contour is defined by its parameters. However, the contours of the enhancement layer are outdated.

A contour of a child node is embedded in a region that is fully bounded by contours defined by its parent nodes in the tree. The top layer of branches in the enhancement layer will be embedded in regions that are completely defined in the base layer. Once they are geometrically morphed, the second layer of branches of the enhancement layer will be embedded in completely defined regions, etc. Hence, the prediction module can solve it recursively.

On Figure 6, the left part shows a region 40 of a frame at time t, delimited by curves 41. A child node specifies a curve 42 splitting the region 40 in two subregions. The right part shows the corresponding region 43 of the frame at time t+1, delimited by curves 44. The curve 45 is in the enhancement layer and needs to be predicted from the curve 42, guided by the mapping of the base layer curves 41, 44.

The prediction module transforms a vectorized curve by repositioning its handles. The handles are guiding points that define the curve's shape. Depending on the type of vectorization (Bezier, spline, ...), the curve may pass through those points or may use them to define local spatial derivatives. In any case, changing a curve according to a certain geometric mapping, corresponds to repositioning its handles. Accordingly, the prediction module defines a coordinate mapping.

This is an interpolation or regression problem. The mapping is defined at the boundaries and in between we assume some smoothness constraint. This can be solved by e.g. Gaussian Process Regression. Close to a boundary curve, the mapping will be defined by the geometric changes of that curve, and it influence will decay towards the interior of the region (by a Gaussian window).

An alternative is to tessellate the region into triangles by adding diagonals at boundary handles. Each triangle can be modeled as a Bezier triangle that defines the mapping within. The advantage of segmenting into Bezier triangles, is that every point can now be written by its unique baricentric coordinates within its triangle. The mapping is defined on the edges of the triangle, so the prediction module can use these coordinates to interpolate a mapping on all points and handles of the vectorization.

The same holds for the textures in the enhancement layer. They will have to be morphed in a similar manner. Not by relocation of the handles, but by changing either their parameters or the way we'll sample the texture. In an example wherein the texture is a constant color, no mapping is needed. Neither is the case, when the texture is shading regions smoothly, while it is only defined at the boundaries, since contours already would have been morphed (see above). When the texture is modeled by a color gradient, the gradient vector should be geometrically morphed (translated, rotated and scaled) similarly to mapping the handles in the paragraph above. If the texture is a 2D image or its FFT, the prediction module can sample it non-uniformly, by relocating the samples with the same mapping, or by pre-mapping the 2D image itself.

**Figure 7** is a structural view of the video transmission device, which may be an encoder device 10, 20, 30 or a decoder device 11, 21, 31. The video transmission device comprises a processor 50 and a memory 51. The memory 51 stores a computer program P which, when executed by the processor 50, causes the video processing device to execute one of the method described above with reference to Figure 1 to 6.

It is to be remarked that the functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared, for example in a cloud computing architecture. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Their function may be carried out through the operation of program logic, through dedicated logic, through the interaction of program control and dedicated logic, or even manually, the particular technique being selectable by the implementer as more specifically understood from the context.

It should be further appreciated by those skilled in the art that any block diagrams herein represent conceptual views of illustrative circuitry embodying the principles of the invention. Similarly, it will be appreciated that any flow charts represents various processes which may be substantially represented in computer readable medium and so executed by a computer or processor, whether or not such computer or processor is explicitly shown.

Embodiments of the method can be performed by means of dedicated hardware and/of software or any combination of both.

While the principles of the invention have been described above in connection with specific embodiments, it is to be clearly understood that this description is made only by way of example and not as a limitation on the scope of the invention, as defined in the appended claims.

## Claims

1. Method for transmission of a video, executed by a decoder device (11, 21, 31), comprising:

   - receiving, from an encoder device (10, 20, 30), successive base layers through a first transmission channel (15, 25, 35) and successive enhancement layers through a second transmission channel (16, 26, 36), wherein the second transmission channel has a higher latency than the first transmission channel, wherein a base layer, respectively an enhancement layer, specifies a partial tree of nodes (2, 3, 4) specifying geometry data, a base layer including a root node and an enhancement layer not including a root node, the geometry data of a node specifying a contour (5) or a texture,
   - determining a combined tree by combining:

      - a received enhancement layer with an adapted base layer which has been determined in function of a plurality of successive corresponding base layers, or
      - a received base layer with an adapted enhancement layer which has been determined in function of a corresponding enhancement layer and a plurality of successive corresponding base layers,

   - determining a modified tree (Tree'(t)) in function of said combined tree, by recursively modifying the geometry data of nodes of the combined tree in function of the geometry data of their respective parent nodes.

2. Method according to claim 1, wherein said combined tree is determined by combining a received enhancement layer (E(t-K)) with an adapted base layer (B'(t)), wherein said adapted base layer is a received base layer which has been determined, by the encoder device, in function of a plurality of successive corresponding base layers.

3. Method according to claim 1, wherein said combined tree is determined by combining a received enhancement layer with an adapted base layer, the method comprising determining said adapted base layer in function of a plurality of successive received base layers.

**4.** Method according to claim 3, wherein determining said adapted base layer in function of a plurality of successive received base layers comprises iteratively determining an updated base layer by changing the geometry data of a first base layer in function of the geometry data of a second base layer, without changing the structure of the first base layer.

**5.** Method according to claim 1, wherein said combined tree is determined in function of a received base layer (B(t)) and an adapted enhancement layer (E'(t)), the method comprising determining said adapted enhancement layer by iteratively determining a restructured enhancement layer in function of the geometry data of a received enhancement layer and of respective differences between the structure of two successive base layers.

**6.** Method according to one of claims 1 to 5, comprising determining an output frame (F'(t)) by rasterizing and/or rendering said modified tree.

**7.** Method according to one of claims 1 to 6, comprising determining a frame offset (K) between said first transmission channel and said second transmission channel.

**8.** Decoder device for transmission of a video, comprising means (50, 51, P) configured for:

- receiving, from an encoder device (10, 20, 30), successive base layers through a first transmission channel (15, 25, 35) and successive enhancement layers through a second transmission channel (16, 26, 36), wherein the second transmission channel has a higher latency than the first transmission channel, wherein a base layer, respectively an enhancement layer, specifies a partial tree of nodes (2, 3, 4) specifying geometry data, a base layer including a root node and an enhancement layer not including a root node, the geometry data of a node specifying a contour (5) or a texture,
- determining a combined tree by combining:

- a received enhancement layer with an adapted base layer which has been determined in function of a plurality of successive corresponding base layers, or
- a received base layer with an adapted enhancement layer which has been determined in function of a corresponding enhancement layer and a plurality of successive corresponding base layers,
- determining a modified tree (Tree'(t)) in function of said combined tree, by recursively modifying the geometry data of nodes of the combined tree in function of the geometry data of their respective parent nodes.

**9.** Method for transmission of a video, executed by an encoder device (10, 20, 30), comprising:

- determining a tree (Tree(t-K)) of nodes in function of a frame, wherein said nodes specifies geometry data defining contours and textures, wherein said contours segment said frame in a plurality of regions,
- determining a base layer and an enhancement layer in function of said tree, wherein a base layer, respectively an enhancement layer, specifies a partial tree of nodes, a base layer including a root node and an enhancement layer not including a root node,
- sending said base layer to a decoder device (11, 21, 31) through a first transmission channel (15, 25, 35) and sending said enhancement layer to the decoder device through a second transmission channel (16, 26, 36), wherein the second transmission channel has a higher latency than the first transmission channel.

**10.** Method according to claim 9, wherein sending said base layer to the decoder device comprises:

- determining successive base layers in function of successive frames,
- determining an adapted base layer (B'(t)) in function of successive base layers, and
- sending said adapted base layer to the decoder device.

**11.** Method according to claim 9, comprising:

- determining successive base layers in function of successive frames,
- determining differences (D(t)) between the structure of two successive base layers, and
- sending said differences to the decoder device through said first transmission channel.

**12.** Encoder device (10, 20, 30) for transmission of a video, comprising means (50, 51, P) configured for:

- determining a tree (Tree(t-K)) of nodes in function of a frame, wherein said nodes specifies geometry data defining contours and textures, wherein said contours segment said frame in a plurality of regions,
- determining a base layer and an enhancement layer in function of said tree, wherein a base layer, respectively an enhancement layer, specifies a partial tree of nodes, a base layer including a root node and an enhancement layer not including a root node,

- sending said base layer to a decoder device (11, 21, 31) through a first transmission channel (15, 25, 35) and sending said enhancement layer to the decoder device through a second transmission channel (16, 26, 36), wherein the second transmission channel has a higher latency than the first transmission channel.

13. System comprising at least one encoder device according to claim 12 and at least one decoder device according to claim 8.

14. Computer program (P) comprising instructions for performing the method of one of claims 1 to 7 and 9 to 11 when said instructions are executed by a computer.

**Amended claims in accordance with Rule 137(2) EPC.**

1. Method for transmission of a video, executed by a decoder device (11, 21, 31), **characterized by** comprising:

> - receiving, from an encoder device (10, 20, 30), successive base layers through a first transmission channel (15, 25, 35) and successive enhancement layers through a second transmission channel (16, 26, 36), wherein the second transmission channel has a higher latency than the first transmission channel, wherein a base layer specifies a base partial tree of nodes (2, 3, 4) specifying geometry data, a base partial tree including a root node, and wherein an enhancement layer specifies an enhancement partial tree of nodes, an enhancement partial tree not including a root node, the geometry data of a node specifying a contour (5) or a texture,
> - determining a combined tree by combining:
>
> > - a received enhancement partial tree with an adapted base partial tree which has been determined in function of a plurality of successive corresponding base partial trees, or
> > - a received base partial tree with an adapted enhancement partial tree which has been determined in function of a corresponding enhancement partial tree and a plurality of successive corresponding base partial trees,
>
> - determining a modified tree (Tree'(t)) in function of said combined tree, by recursively modifying the geometry data of a node of the combined tree in function of the geometry data of its parent node.

2. Method according to claim 1, wherein said combined tree is determined by combining a received enhancement partial tree (E(t-K)) with an adapted base partial tree (B'(t)), wherein said adapted base partial tree is a received base partial tree which has been determined, by the encoder device, in function of a plurality of successive corresponding base partial trees.

3. Method according to claim 1, wherein said combined tree is determined by combining a received enhancement partial tree with an adapted base partial tree, the method comprising determining said adapted base partial tree in function of a plurality of successive received base partial trees.

4. Method according to claim 3, wherein determining said adapted base partial tree in function of a plurality of successive received base partial trees comprises iteratively determining an updated base partial trees by changing the geometry data of a first base partial trees in function of the geometry data of a second base partial tree, without changing the structure of the first base partial trees.

5. Method according to claim 1, wherein said combined tree is determined in function of a received base partial tree (B(t)) and an adapted enhancement partial tree (E'(t)), the method comprising determining said adapted enhancement partial tree by iteratively determining a restructured enhancement partial tree in function of the geometry data of a received enhancement partial tree and of respective differences between the structure of two successive base partial trees.

6. Method according to one of claims 1 to 5, comprising determining an output frame (F'(t)) by rasterizing and/or rendering said modified tree.

7. Method according to one of claims 1 to 6, comprising determining a frame offset (K) between said first transmission channel and said second transmission channel.

8. Decoder device for transmission of a video, **characterized by** comprising means (50, 51, P) configured for:

> - receiving, from an encoder device (10, 20, 30), successive base layers through a first transmission channel (15, 25, 35) and successive enhancement layers through a second transmission channel (16, 26, 36), wherein the second transmission channel has a higher latency than the first transmission channel, wherein a base layer specifies a base partial tree of nodes (2, 3, 4) specifying geometry data, a base partial tree including a root node, and wherein an enhancement layer specifies an enhancement partial tree of nodes, an enhancement partial tree not including a root node, the geometry data of a node specifying a contour (5) or a texture,
- determining a combined tree by combining:

- a received enhancement partial tree with an adapted base partial tree which has been determined in function of a plurality of successive corresponding base partial trees, or
- a received base partial tree with an adapted enhancement partial tree which has been determined in function of a corresponding enhancement partial tree and a plurality of successive corresponding base partial trees,
- determining a modified tree (Tree'(t)) in function of said combined tree, by recursively modifying the geometry data a node of the combined tree in function of the geometry data of its parent node.

9. Method for transmission of a video, executed by an encoder device (10, 20, 30), comprising:

- determining a tree (Tree(t-K)) of nodes in function of a frame, wherein said nodes specifies geometry data defining contours and textures, wherein said contours segment said frame in a plurality of regions,
- determining a base layer and an enhancement layer in function of said tree, wherein a base layer, respectively an enhancement layer, specifies a base partial tree of nodes, respectively an enhancement partial tree, a base partial tree including a root node and an enhancement partial tree not including a root node,
- sending said base layer to a decoder device (11, 21, 31) through a first transmission channel (15, 25, 35) and sending said enhancement layer to the decoder device through a second transmission channel (16, 26, 36), wherein the second transmission channel has a higher latency than the first transmission channel.

10. Method according to claim 9, wherein sending said base layer to the decoder device comprises:

- determining successive base layers in function of successive frames,
- determining an adapted base partial tree (B'(t)) in function of successive base partial trees, and
- sending said adapted base partial tree to the decoder device.

11. Method according to claim 9, comprising:

- determining successive base layers in function of successive frames,
- determining differences (D(t)) between the structure of two successive base partial trees, and
- sending said differences to the decoder device through said first transmission channel.

12. Encoder device (10, 20, 30) for transmission of a video, comprising means (50, 51, P) configured for:

- determining a tree (Tree(t-K)) of nodes in function of a frame, wherein said nodes specifies geometry data defining contours and textures, wherein said contours segment said frame in a plurality of regions,
- determining a base layer and an enhancement layer in function of said tree, wherein a base layer, respectively an enhancement layer, specifies a bases partial tree of nodes, respectively an enhancement partial tree, a base layer including a root node and an enhancement layer not including a root node,
- sending said base layer to a decoder device (11, 21, 31) through a first transmission channel (15, 25, 35) and sending said enhancement layer to the decoder device through a second transmission channel (16, 26, 36), wherein the second transmission channel has a higher latency than the first transmission channel.

13. System comprising at least one encoder device according to claim 12 and at least one decoder device according to claim 8.

14. Computer program (P) comprising instructions for performing the method of one of claims 1 to 7 and 9 to 11 when said instructions are executed by a computer.

FIG. 1

FIG. 2

FIG. 3

FIG. 4

FIG.5

41

40

42

41

41

41

43

44

44

44

45

44

44

FIG.6

10, 20, 30, 11, 21, 31

| 50 | P |
|----|---|

51

FIG. 7

Europäisches
Patentamt

European
Patent Office

Office européen
des brevets

**EUROPEAN SEARCH REPORT**

Application Number

EP 16 30 5956

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/287109 A1 (WANG XIANGLIN [US] ET AL) 31 October 2013 (2013-10-31) * abstract * * paragraph [0056] - paragraph [0061] * * paragraph [0105] - paragraph [0110]; figure 5 * * paragraph [0147] - paragraph [0149]; figure 9 * * figure 16 * | 1-14 | INV. H04N19/33 H04N19/37 |
| X | EP 2 830 312 A1 (SAMSUNG ELECTRONICS CO LTD [KR]) 28 January 2015 (2015-01-28) * paragraph [0160] - paragraph [0408]; figures 14-22 * | 1-14 | |
| A | US 2014/369426 A1 (LI XIANG [US] ET AL) 18 December 2014 (2014-12-18) * paragraph [0078] * * paragraph [0109] * * paragraph [0146] - paragraph [0175]; figures 2, 3 * | 1-14 | |
| | | | TECHNICAL FIELDS SEARCHED (IPC) |
| | | | H04N |

The present search report has been drawn up for all claims

| Place of search | Date of completion of the search | Examiner |
|---|---|---|
| Munich | 9 February 2017 | Morbee, Marleen |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.......................................................................

& : member of the same patent family, corresponding
document

EPO FORM 1503 03.82 (P04C01)

## ANNEX TO THE EUROPEAN SEARCH REPORT
### ON EUROPEAN PATENT APPLICATION NO.                    EP 16 30 5956

This annex lists the patent family members relating to the patent documents cited in the above-mentioned European search report.
The members are as contained in the European Patent Office EDP file on
The European Patent Office is in no way liable for these particulars which are merely given for the purpose of information.

09-02-2017

| Patent document cited in search report | | Publication date | Patent family member(s) | | | Publication date |
|---|---|---|---|---|---|---|
| US 2013287109 | A1 | 31-10-2013 | US | 2013287109 | A1 | 31-10-2013 |
| | | | WO | 2013165808 | A1 | 07-11-2013 |
| EP 2830312 | A1 | 28-01-2015 | CN | 104322067 | A | 28-01-2015 |
| | | | EP | 2830312 | A1 | 28-01-2015 |
| | | | JP | 2015514350 | A | 18-05-2015 |
| | | | KR | 20130106794 | A | 30-09-2013 |
| | | | TW | 201347554 | A | 16-11-2013 |
| | | | US | 2015043639 | A1 | 12-02-2015 |
| | | | WO | 2013141596 | A1 | 26-09-2013 |
| US 2014369426 | A1 | 18-12-2014 | CN | 105284113 | A | 27-01-2016 |
| | | | EP | 3011742 | A1 | 27-04-2016 |
| | | | JP | 2016524878 | A | 18-08-2016 |
| | | | KR | 20160022345 | A | 29-02-2016 |
| | | | US | 2014369426 | A1 | 18-12-2014 |
| | | | WO | 2014204811 | A1 | 24-12-2014 |

EPO FORM P0459

For more details about this annex : see Official Journal of the European Patent Office, No. 12/82